Europäisches Patentamt

European Patent Office

Office européen des brevets

(11) Publication number: **0 261 538 B1**

# EUROPEAN PATENT SPECIFICATION

(45) Date of publication of patent specification: **21.08.91**    (51) Int. Cl.⁵: **F02F  3/26**, F02B 23/06

(21) Application number: **87113388.0**

(22) Date of filing: **14.09.87**

(54) Internal combustion engine piston incorporating an internal combustion chamber.

(30) Priority: **23.09.86 IT 5386386 U**

(43) Date of publication of application:
**30.03.88 Bulletin  88/13**

(45) Publication of the grant of the patent:
**21.08.91 Bulletin  91/34**

(84) Designated Contracting States:
**DE ES FR GB**

(56) References cited:
**CH-A- 259 561**

**PATENT ABSTRACTS OF JAPAN, vol. 10, no.
331 (M-533)[2387], 11th November 1986; &
JP-A-61 135 927 (MAZDA MOTOR CORP.)
23-06-1986**

(73) Proprietor: **IVECO FIAT S.p.A.
Via Puglia 35
I-10156 Torino(IT)**

(72) Inventor: **Tardi, Riccardo
Via Breglio, 87
I-10100 Torino(IT)**

(74) Representative: **Prato, Roberto et al
STUDIO TORTA Società Semplice Via Viotti 9
I-10121 Torino(IT)**

## Description

The present invention relates to an internal combustion engine piston incorporating an internal combustion chamber defined by a lateral surface originating from the upper surface of the piston, and by a bottom surface blending with the said lateral surface.

The lateral surface of chambers of the aforementioned type usually comprises a tapered surface portion blending with the bottom surface, which is also tapered. Pistons incorporating combustion chambers of the aforementioned type have been found, at a certain point in their working life, to present breaks on the upper edge of the chamber, where the lateral surface of the chamber intersects the upper surface of the piston. Such breaks are usually the result of cracks forming in the aforementioned area, and substantially in the plane through the axis of the chamber and parallel with the plane containing the axes of the piston pin seats. The said cracks are, in turn, the result of continual tensile and compressive stress on the uppermost part of the piston, in the proximity of the said plane, and are severest on the upper edge of the lateral surface of the chamber, due to the concentration of stresses produced by the notching effect, which is particularly marked on the said upper edge.

For reducing the stress and preventing break formation, or quite simply for extending the working life of the piston itself, the design of the chamber has been modified by providing a curved blending surface for rounding off the sharp edges where the lateral surface of the chamber intersects the upper surface of the piston. Though this has succeeded in extending the working life of the piston, it has failed to provide an overall solution to the aforementioned drawbacks.

It is also known from the CH-A-259 561 an internal combustion engine piston having a combustion chamber provided with an aperture through which an injector can inject the fuel. The combustion chamber is in form of a revolution solid having an oval vertical diametrical section, to cause therein an air vortex. In an embodiment where a deeper chamber is required, the oval section must have a greater minor axis, whereas the upper aperture must have a minor diameter. To avoid the collision of the jet of fluid with the upper surface of the piston, in correspondence with the injector a circular cavity is formed on the edge of the combustion chamber. A diametrically opposite similar cavity is also formed on the chamber edge for purpose of symmetry and freedom of orientation of the piston when assembled.

The aperture of this chamber of combustion is provided in a rather thin wall defined by a short cylindrical surface between the upper surface of the piston and the oval section surface, whereby sharp edges result at the two ends of the cilindrical surface. In addition, each cavity is obtained by a partly cylindrical surface having an axis converging on the axis of the chamber, whereby a sharper edge is obtained on the lower end of the cavity surface.

The aim of the present invention is to provide an internal combustion engine piston incorporating an internal combustion chamber, which piston provides for overcoming the aforesaid drawbacks by substantially eliminating the formation of fatigue failure during operation.

With this aim in view, according to the present invention, there is provided an internal combustion engine piston incorporating a combustion chamber defined by a tapered lateral surface originating form the upper surface of the said piston and by a bottom surface of the said piston, the said chamber being provided with a pair of diametrically opposite cavities located substantially in a first plane containing the axis of the said chamber and parallel to the axes of the piston pin seats, each cavity being symmetrical in relation to the said first plane and decreasing gradually in depth toward its opposite ends, characterised in that between the said lateral surface and the said upper surface a curved blending surface is provided for rounding off the sharp edge where the said lateral surface intersects the said upper surface, and in that each of the said cavities is defined by a surface consisting of an envelope of curved vertical segments blending with the said upper surface of the said piston and with the said lateral surface of the said chamber.

The present invention will now be described in detail, by way of a non-limiting example, with reference to the accompanying drawings, in which :

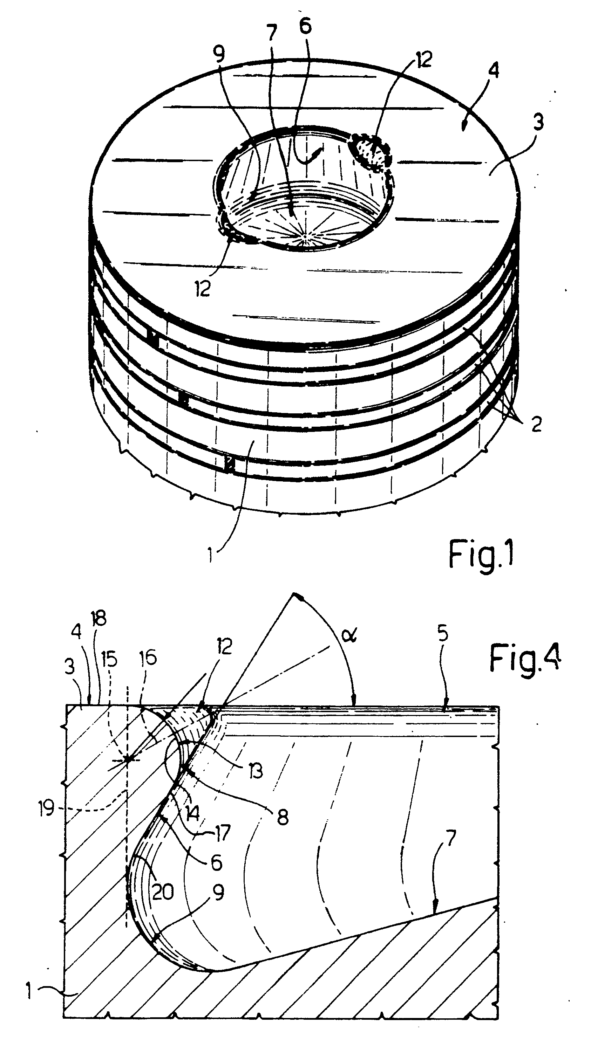

Fig.1 shows a view in perspective of the top part of a piston in accordance with the teachings of the present invention;

Fig.2 shows a plan view of the Fig.1 piston;

Fig.3 shows a section along line III-III of the Fig.2 piston;

Fig.4 shows a larger-scale view of part of the fig.3 section.

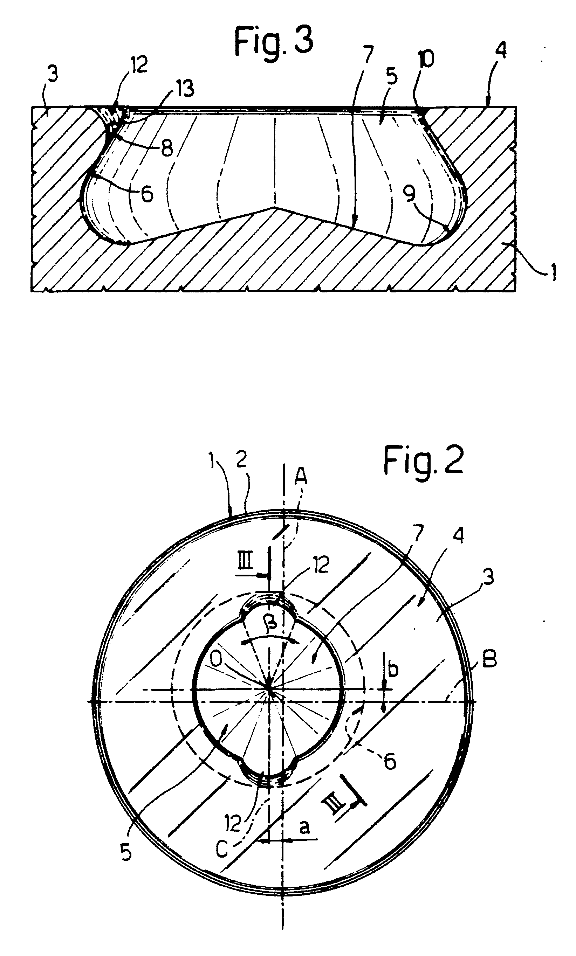

The piston according to the present invention is designed for an internal combustion engine, in particular, a Diesel engine, and substantially comprises an outer skirt 1, in which are formed grooves for piston rings 2, and an upper wall 3 defined by an upper surface 4. The piston presents a combustion chamber 5 defined by a lateral surface 6 (Fig. 3) and a bottom surface 7. Lateral surface 6 substantially comprises a tapered surface portion 8, and bottom surface 7, which is also tapered, is blended with lateral surface 6 by an ample curved surface 9. Tapered surface portion 8 is blended with upper surface 4 of the piston by a further curved surface 10. As shown clearly in Fig. 2, the axis O of combustion chamber 5 is offset a given distance in relation to the piston axis. In more detail, if A is the plane containing the piston pin axes, and B the plane perpendicular to plane A and passing through the piston axis, the distance between the aforementioned axes and the axis O of combustion chamber 5 is as shown by a and b.

According to the present invention, combustion chamber 5 comprises two cavities 12, each substantially located on a plane (C in Fig.2) parallel with the plane containing the piston pin seat axes and, therefore, parallel with the said plane A. The said cavities are located on opposite sides of the chamber axis (O in Fig.2), and are both defined by a surface 13 (fig.4) blending with upper surface 4 of the piston and with lateral surface 6 of chamber 5.

Each cavity 12 is conveniently symmetrical in relation to the plane (C in Fig.2) parallel with that containing the piston pin seat axes, and gradually decreases in depth from the said plane towards the intersection of surface 13 of cavity 12 and lateral surface 6 of chamber 5. As shown clearly in the accompanying drawings, surface 13 defining cavity 12 is a convex surface conveniently consisting of an envelope of circumferential arcs.

A section along plane C of each cavity 12 conveniently presents the geometrical characteristics shown in Fig.4. When so sectioned, surface 13 presents a circumferential arc 14, the centre 15 of which lies on line 16 bisecting the angle $\alpha$ formed by the generating line 17 of tapered surface portion 8 on plane C, and by the line 18 produced by intersecting upper surface 4 of the piston with plane C.

Furthermore, the centre 15 of circumferential arc 14 is located at the point in the said plane produced by intersecting bisecting line 16 with line 19 in the same plane, which line 19 is parallel with the axis of the piston and tangent to curve 20 produced by intersecting curved surface 9 of chamber 5 with the said plane C.

When sectioned along a further axis passing through the axis of chamber 5 and other than the said plane C, surface 13 defining each cavity 12 conveniently presents, as in Fig.4, a circumferential arc, the centre of which lies on the line bisecting the angle formed by the generating line of tapered surface portion 8 on the said further axis, and by the line produced by intersecting upper surface 4 of the piston with the said further axis.

Though each of the said cavities 12 may be of any width, it conveniently occupies a portion of lateral surface 6 of chamber 5 having an angle of less than 180°.

The piston according to the present invention has been found to manifest substantially no working fatigue, by virtue of reducing maximum stress and, therefore, the notching effect on the most highly stressed portions of the piston, and this by virtue of cavities 12 and the special design of surfaces 13 defining the same.

## Claims

1. An internal combustion engine piston incorporating an internal combustion chamber, the said chamber (5) being defined by a tapered lateral surface (6) originating from the upper surface (4) of the said piston and by a bottom surface (7) blending with the said lateral surface, the said chamber (5) being provided with a pair of diametrically opposite cavities (12) located substantially in a first plane (C) containing the axis (O) of the said chamber and parallel to the axes of the piston pin seats, each cavity (12) being symmetrical in relation to the said first plane (C) and decreasing gradually in depth toward its opposite ends, characterised in that between the said lateral surface (6) and the said upper surface (4) a curved blending surface (10) is provided for rounding off the sharp edge where the said lateral surface intersects the said upper surface, and in that each of the said cavities (12) is defined by a surface (13) consisting of an envelope of curved vertical segments blending with the said upper surface (4) of the said piston and with the said lateral surface (6) of the said chamber (5).

2. A piston as claimed in Claim 1, characterised in that each of the said segments is a circumferential arc located in a corresponding diametrical section plane of each of the said cavities (12), the center each circumferential arc lying on the line bisecting the angle ($\alpha$) formed by the generating line of the said lateral surface (6) and by the line produced by intersecting the said upper surface (4) with the said corresponding section plane.

3. A piston as claimed in Claim 2, characterised in that the said bottom surface (7) is also tapered and is blended to the said laterale surface (6) by a blending curved surface (9), the center of the circumferential arc (14) located on said first plane (C) lying at a point (15) produced by intersecting the said bisecting line (16) with a line (19) parallel with the said axis (O) of the said chamber (5) and tangent to the curve (20) produced by intersecting the said curved surface (9) with the said first plane (C).

**Revendications**

1. Piston pour un moteur à combustion interne, comportant une chambre de combustion interne, ladite chambre (5) étant définie par une surface latérale conique (6) partant de la surface supérieure (4) dudit piston, et par une surface de fond (7) se raccordant à ladite surface latérale, ladite chambre (5) étant pourvue d'un couple de cavités diamétralement opposées (12) situées essentiellement dans un premier plan (C) contenant l'axe (O) de ladite chambre et parallèle aux axes des sièges de l'axe de piston, chaque cavité (12) étant symétrique par rapport audit premier plan (C) et ayant une profondeur diminuant graduellement en direction de ses extrémités opposées, caractérisé en ce qu'entre ladite surface latérale (6) et ladite surface supérieure (4), il est prévu une surface incurvée de jonction (10) destinée à arrondir l'arête vive, au niveau de laquelle ladite surface latérale recoupe ladite surface supérieure, et en ce que chacune desdites cavités (12) est définie par une surface (13) constituée par une enveloppe formée de segments verticaux courbes se raccordant à ladite surface supérieure (4) dudit piston et à ladite surface latérale (6) de ladite chambre (5).

2. Piston selon la revendication 1, caractérisé en ce que chacun desdits segments est un arc circonférentiel situé dans un plan de coupe diamétral correspondant de chacune desdites cavités (12), le centre de chaque arc circonférentiel étant situé sur la droite bissectant l'angle (α) formé par la génératrice de ladite surface latérale (6) et par la droite d'intersection de ladite surface supérieure (4) et dudit plan de coupe correspondant.

3. Piston selon la revendication 2, caractérisé en ce que ladite surface de fond (7) est également conique et se raccorde à ladite surface latérale (6) par une surface courbe de jonction (9), le centre de l'arc circonférentiel (14) dans ledit premier plan (C) étant situé en un point (15) qui est l'intersection de ladite bissectrice (16) avec une droite (19) parallèle audit axe (O) de ladite chambre (5) et tangente à la courbe (20) formée par l'intersection de ladite surface courbe (9) avec ledit premier plan (C).

**Patentansprüche**

1. Kolben mit innerer Verbrennungskammer für eine Brennkraftmaschine, bei dem die Kammer (5) durch eine von der oberen Oberfläche (4) des Kolbens ausgehende, verjüngte Seitenfläche (6) und eine fließend in die Seitenfläche übergehende Bodenfläche (7) begrenzt wird und zwei einander diametral gegenüberliegende Höhlungen (12) aufweist, die im wesentlichen in einer ersten Ebene (C) liegen, die die Achse (O) der Kammer enthält und parallel zu den Achsen der Kolbenbolzensitze verläuft, wobei jede Höhlung (12) symmetrisch in bezug auf die erste Ebene (C) ist und eine allmählich zu ihren entgegengesetzten Enden hin abnehmende Tiefe aufweist, dadurch **gekennzeichnet**, daß zwischen der Seitenfläche (6) und der oberen Oberfläche (4) eine gekrümmte Übergangsfläche (10) vorgesehen ist, um die scharfe Kante an der Schnittlinie zwischen der Seitenfläche und der oberen Oberfläche abzurunden, und daß jede der Höhlungen (12) durch eine Oberfläche (13) gebildet wird, die aus einer Hüllfläche von gekrümmten vertikalen Segmenten besteht, die fließend in die obere Oberfläche (4) des Kolbens und in die Seitenfläche (6) der Kammer (5) übergehen.

2. Kolben nach Anspruch 1, dadurch **gekennzeichnet**, daß jedes der Segmente einen Umfangs-Bogen in einer entsprechenden diametralen Schnittebene jeder der Höhlungen (12) ist, wobei der Krümmungsmittelpunkt jedes Bogens auf der Winkelhalbierenden des Winkels (α) liegt, der zwischen der erzeugenden Geraden der Seitenfläche (6) und der Schnittgeraden zwischen der oberen Oberfläche (4) und der betreffenden Schnittebene gebildet wird.

3. Kolben nach Anspruch 2, dadurch **gekennzeichnet**, daß die Bodenfläche (7) ebenfalls konisch verjüngt ist und über eine gekrümmte Übergangsfläche (9) fließend in die Seitenfläche (6) übergeht, wobei der Krümmungsmittelpunkt des Umfangs-Bogens (14), der in der ersten Ebene (C) liegt, sich an einem Punkt (15) befindet, der durch den Schnitt der Winkelhalbierenden (16) mit einer Geraden (19) definiert wird, die parallel zu der Achse (O) der Kammer (5) verläuft und eine Tangente zu der durch den Schnitt der gekrümmten Übergangsfläche (9) mit der ersten Ebene (C) gebildeten Kurve (20) ist.

Fig.1

Fig.4

# Fig. 3

# Fig. 2